Europäisches Patentamt

European Patent Office

Office européen des brevets

(19)

(11) **EP 0 718 732 A2**

(12) **EUROPÄISCHE PATENTANMELDUNG**

(43) Veröffentlichungstag:
26.06.1996 Patentblatt 1996/26

(51) Int. Cl.[6]: **G05D 1/02**

(21) Anmeldenummer: 95118004.1

(22) Anmeldetag: 15.11.1995

(84) Benannte Vertragsstaaten:
**CH DE FR GB IT LI NL**

(30) Priorität: 15.11.1994 DE 4440859

(71) Anmelder: **Kaske, Alexander**
**D-50933 Köln (DE)**

(72) Erfinder: **Kaske, Alexander**
**D-50933 Köln (DE)**

(74) Vertreter: **Liedl, Christine, Dipl.-Chem. et al**
**Hansmann & Vogeser**
**Patentanwälte,**
**Postfach 70 08 60**
**D-81308 München (DE)**

(54) **Verfahren und Vorrichtung zum Steuern eines autonom explorierenden Roboters**

(57) Die Erfindung betriff ein Verfahren sowie eine Vorrichtung zum Steuern eines autonom explorierenden Roboters, wobei von einer sensorischen Einrichtung (SE) erfaßte Werte (S2) einem strategiegenerierenden Netzwerk (SGNW) zugeführt werden, welches aufgrund seiner während einer Trainingsphase auftrainierten Synapsenstärken Steuerbefehle (S1) an Handlungseinheiten (HE) abgibt. Weiterhin werden die von der sensorischen Einrichtung erfaßten Werte (S2) und die vom strategiegenerierenden Netzwerk (SGNW) ausgegebenen Steuerbefehle (S1) einem Netzwerksystem mit mehreren Netzwerken (B1, B2) zugeführt. Dieses Netzwerksystem unterscheidet zwischen während einer Trainingsphase auftrainierten Wertepaaren (S1/S2) und unbekannten Wertepaaren (S1/S2).

Fig. 1

EP 0 718 732 A2

**Beschreibung**

Die Erfindung betrifft ein Verfahren sowie eine Vorrichtung zum Steuern eines autonom explorierenden Roboters gemäß den Oberbegriffen der Ansprüche 1 und 11.

Sollen Arbeiten in einer für den Menschen feindlichen Umgebung durchgeführt werden, so bietet es sich an, hierfür Roboter einzusetzen. Diese Roboter können mittels einer Fernsteuerung oder eines in einer robotereigenen Recheneinheit implementierten Programms gesteuert werden.

Der Einsatz einer Fernsteuerung setzt voraus, daß sich die Bedienungsperson an der Fernsteuerung zumindest in Kommunkationsreichweite mit dem Roboter befindet. Dies ist aber in einer Reihe von Anwendungsfällen nicht möglich, insbesondere dann, wenn die Entfernung zwischen Bedienungsperson und Roboter zu groß wird, oder aber, wenn Störungen in der Kommunikation zwischen Roboter und Bedienungsperson auftreten können.

Demgegenüber weist ein Roboter, der mittels eines ihm eigenen Programms arbeitet, eine größere Unabhängigkeit gegenüber dem ferngesteuerten Roboter auf. Jedoch setzt die Verwendung eines Programms voraus, daß während der Programmierung alle eventuell auftretenden Situationen für den Roboter bereits bekannt und entsprechende Handlungstrategien dem Roboter mit eingegeben werden. Wird jedoch der Roboter für Arbeiten eingesetzt, bei denen entweder die Einsatzumgebung und die damit möglicherweise auftretenden Situationen nicht vollständig bekannt sind und/oder aber Bedingungen auftreten können, die zum Zeitpunkt der Programmierung noch nicht vorhersehbar sind, so scheitert ein Roboter, der mittels eines Programms gesteuert wird. Wird demgegenüber versucht, die dem Roboter bereits bekannten Situationen dadurch zu erweitern, daß mit der Recheneinheit eine Datenbank verbunden ist, die eine Vielzahl von gegebenen Situationen speichert, so werden hierfür erhebliche Rechenzeiten beansprucht, so daß der Roboter bei Auftreten einer für ihn zunächst unbekannten Situation einen verhältnismäßig langen Zeitraum stillgesetzt wird, bis nach Durchsuchen des Datenbestandes eine entsprechende Lösungsstrategie gefunden wird. Dies kann aber dann von Nachteil sein, wenn der Roboter in eine Situation gerät, die eine sofortige Handlung erfordert.

Es sind in der Praxis bereits Netzwerke mit vorgeschalteten Kohonenkarten bekannt, die jedoch nicht in der Lage sind, zwischen bekannten und unbekannten Situationen zu unterscheiden. Damit können keine gezielten Ausweichverhalten gegenüber ungewöhnlichen Situationen generiert werden. Auch bleibt das Verhalten in diesen neuen Situationen völlig stereotyp, da ja zu einem durch eine Sensorik erfaßten Wert mit einem Steuerbefehl geantwortet wird, welcher einem gespeicherten sensorischen Wert am nächsten kommt. Eine Variation des Verhaltens wäre nur über eine Superposition von Ausgangswerten möglich, die den ähnlichsten gespeicherten Situationen entsprechen. Allerdings ist diese Superposition durch die Filterwirkung der Kohonenkarte fast ausgeschlossen. Es käme zur Instabilität des Musters in der Kohonenkarte mit wechselnder Aktivität entsprechend der Ähnlichkeit zu den gespeicherten Prototypen. Das System würde also im Grunde sein Handlungsrepertoir nach einander ausprobieren. Ein Lernprozeß tritt nur nach dem Erfolg einer dieser Versuche ein. Das spezifische dieser neuen Situation geht darüber hinaus in diesem Lernprozeß fast vollständig verloren. Es ändert sich allenfalls geringfügig die Kohonenkarte. Das Netzwerk würde aus dem Erfolg sehr wenig lernen (die Stereotypen werden etwas erweitert oder vermindert in der Kohonenkarte, während das Repertoire des Netzwerkes praktisch unverändert bleibt) und könnte aus einem Mißerfolg überhaupt keine Schlußfolgerungen ziehen.

Es ist Aufgabe der vorliegenden Erfindung, ein Verfahren sowie eine Vorrichtung der eingangs genannten Art zu schaffen, das bzw. die es dem Roboter innerhalb des real-time-Modus gestattet, zwischen einer bekannten und einer unbekannten Situation zu unterscheiden.

Die vorliegende Aufgabe wird verfahrensgemäß mit den Merkmalen des Anspruchs 1 gelöst. Durch die Verwendung des erfindungsgemäßen Netzwerksystems benötigt der Roboter nicht mehr eine umfangreiche Datenbank möglicher auftretender Situationen. Es genügt vielmehr, dem Roboter während einer Trainingsphase selektierte Wertepaare, die aus durch die sensorische Einrichtung zu erfassenden Werten der Umwelt und den hierzu gehörenden Steuerbefehlen bestehen, aufzutrainieren. Ein derartiges Auftrainieren führt bei den eingesetzten Netzwerken zur Ausbildung bestimmter Synapsenstärken. Wird während des Betriebs des Roboters durch das erfindungsgemäße Netzwerksystem ein bekanntes Wertepaar aus von der sensorischen Einrichtung erfaßten Umweltwerten und von dem strategiegenerierenden Netzwerk hierzu erzeugte Steuerbefehlen erkannt, so kann dieses Wertepaar zum einen zu weiteren, bereits gelernten Wertepaaren führen, die dem Roboter dann gestatten, einen bereits ihm bekannten Pfad bzw. Lösungsweg zu beschreiten. Zum anderen wird dem Roboter die Möglichkeit eröffnet, Erfahrung zu sammeln in der Form, daß die Wertepaare, die vor dem Erkennen des durch das Netzwerksystem als bekannt eingestuften Wertepaares ebenfalls erfaßt worden sind, mit diesem bekannten Wertepaar abgespeichert werden. Da die Wertepaare Resultat von Handlungen des Roboters sind, können somit an sich unbekannte Wertepaare zu bekannten "gemacht" werden. Tritt in einer zukünftigen Situation dann wieder ein Wertepaar auf, das aus der Reihe der bereits abgespeicherten Wertepaare stammt, so besteht die Möglichkeit, die anderen hierzu gehörenden Wertepaare zu rekonstruieren bzw. die Erfahrung zu vergrößern.

Die auftrainierten Wertepaare determinieren in ihrer Abfolge den somit gelernten Lösungspfad, der zu einer Aufgabe gehört. Das Ziel dieses Pfades ist das Erreichen eines Unterraumes H aller möglichen Wertepaare (S1S2). In erster Stufe definiert das Erreichen von H von welcher Ausgangsposition im Raum der (S1S2) Wertepaare auch immer die Aufgabe. Eine zusätzliche Bestimmung und Selektion der Tätigkeit des Roboters kann durch dessen Plazierung im Raum der Wertepaare (etwa durch einen Befehl (S2) oder direkten Eingriff in den Zustand des Roboters (S1S2)) erfolgen. Letztlich werden so verschiedene Lösungspfade ausgewählt. Später können Teilstrecken dieser Lösungspfade zusätzlich von außen belohnt werden (direkter Eingriff bzw. Versetzen nach H).

Ausgehend von einem eventuell zufällig vorgegebenen Repertoire von (gespeicherten) kann das System durch Variation seiner gespeicherten Wertepaare durch die chaotischen Zustände des Netzwerksystems in Abwesenheit eines bekannten Lösungspfades (neue Wertepaare) sein Repertoire erweitern. Selektiert werden die Wertepaare, die direkt oder indirekt über einen bekannten Lösungspfad (bekannte Wertepaar) nach H führen. Das heißt, alle gespeicherten Wertepaare führen nach H bzw. stellen den nun wachsenden Unterraum H dar. Der Roboter benutzt also eine Versuch und Irrtum-Strategie. Wobei vorwiegend erfolgreiche selektierte Wertepaare variert werden, was praktisch eine evolutionäre Optimierungsstrategie darstellt. Die Analogie zu einem genetischen Algorhythmus liegt nahe und wird noch durch einen crossing over-Prozess vervollständigt (näher ausgeführt unten). Der Vorteil ist, daß explizite Bewertungsfunktionen, die ein Vorwissen über das zu lösende Problem voraussetzen (gutes und schlechtes Verhalten vor Erreichen des Zieles bewerten!) nicht notwendig sind. Darin geht dieser Ansatz über bisherige Ansätze in der Anwendung neuronaler Netze hinaus, die eine solche Bewertungsfunktion oder eine entsprechende Auswahl an Trainingsbeispielen benötigen. Ein weiterer Vorteil ist, daß eine Vertiefung dieser Evolutionsstrategie durch die relativ einfache Übertragung ausgewählter Wertepaare, die H repräsentieren, in zusätzlich angefügte gleichartige Module möglich ist. Für diesen Additionsprozess von Modulen wird ein rekursives Vorgehen vorgeschlagen, das wiederum die erfolgreichen Module betrifft und eine fractale Architektur ermöglicht. Wichtig ist, daß durch den überwachten Additionsprozess H zunächst nicht verändert wird. Die funktionelle Kontinuität bleibt intakt. Es werden zunächst nur weitere Ressourcen für Lernprozesse bereitgestellt. Dabei stellt die vorgeschlagene Architektur durch symmetriebrechende Maßnahmen sicher, daß die neuen Ressourcen zur Differenzierung, nicht nur zur Duplifizierung alter Lösungen benutzt werden.

Das vorgeschlagene Netzwerksystem wirkt praktisch als kognitives Interferrometer, das sehr sensibel zwischen gespeicherten Wertepaaren (durch hohe Rückkopplung und die Trainingsprozesse sind nur diese stabil) und neuen ungespeicherten Wertepaaren unterscheidet. Damit kann einmal Neues spezifisch angegangen werden (vorsichtiges Explorieren oder Ausweichen). Die Dynamik des Netzwerksystems wird ungefiltert an das strategiegenerierende Netzwerk weitergegeben und modifiziert dessen Verhalten in Form geänderter Steuerbefehle bedarfsgerecht. Hierdurch ist es möglich, eine Stabilisierung des Verhaltens in einem erfolgreichen Zustand und eine Variation des Verhaltens in Form veränderter Steuerbefehle in einem Zustand zu erhalten, der keinen Erfolg verspricht. Die Verhaltensvariationen werden situationsspezifisch abgespeichert, wodurch eine Erweiterung und Differenzierung der Diskrimination von Situationen und des Verhaltensrepertoires erfolgt.

Das System kann damit zumindest indirekt aus "Fehlern" lernen, wobei unter dem Begriff "Fehler" das Auftauchen neuer, nicht erwarteter Situationen verstanden wird, die eine Verhaltensmodifikation erfordern. Die Durchbrechung der Erwartung und das Ausbleiben des Erfolgs werden explizit als instabiler Zustand des Netzwerksystems erfaßt und dargestellt. Die Verhaltensweisen, die zur Korrektur der "Fehler" führen, werden einerseits durch Verhaltensvariationen erzeugt und anschließend selektiert sowie unter Berücksichtigung der Besonderheiten der Situation repräsentiert (= Training). Sollten Lernprozesse ausbleiben, verlernt das Netzwerksystem aber nicht, diesen Fehler unter gleichen Gegebenheiten anzuzeigen. Damit bemerkt das System "Fehler" (= unerwartet) und stellt sein Verhalten darauf ein.

Es ist zu bemerken, daß im Sinne der Erfindung unter der sensorischen Einrichtung eine Vorrichtung zu verstehen ist, die aus ein oder mehreren Sensoren oder sensorähnlichen Baugruppen bestehen kann. Die Sensoren können die unterschiedlichsten physikalischen Werte erfassen und ggf. diese noch in eine für die verwendeten Netzwerke geeignete Form transformieren. Des weiteren ist unter Handlungseinheiten jede Form einer Einrichtung zu verstehen, die dem Roboter eine Handlung ermöglicht, sei es, daß ein Betätigungsglied des Roboters in irgendeiner Form verfahren wird, sei es, daß die Empfindlichkeit von seinen Sensoren verändert wird. Insbesondere können die Handlungseinheiten Kombinationen von Netzwerken, Reglern und/oder Servos sein, die zudem noch lokale sensorische Information verarbeiten können. Hierdurch sind sie in der Lage, teilweise autonom die an sie gehenden Steuerbefehle aufgrund der lokal, in Ort und Zeit (bei zu langsamer Variation der Steuerbefehle) vorliegenden Informationen weiter zu differenzieren. Das strategiegenerierende Netzwerk wird so entlastet. Zwischen solcherart differenzierten Handlungseinheiten und der hierarchischen Organisation von Netzwerken besteht eine große Ähnlichkeit. Schließlich ist noch zu bemerken, daß unter Steuerbefehlen jede Form von Befehl an eine derartige Handlungseinheit verstanden werden kann.

Weiterhin ist darauf hinzuweisen, daß der Trainingsvorgang für das strategiegenerierende Netzwerk und die Netzwerke des Netzwerksystems eine doppelte Schleife bilden.

Zur inneren Struktur von strategiegenerierendem Netzwerk und Netzwerksystem: Das strategiegenerierende Netzwerk wird von einem heteroassoziativen (im einfachsten Fall eine Willshaw matrix) oder einem autoassoziativem (etwa ein Hopfield Netz) Netzwerk gebildet . Die Unzulänglichkeiten dieser Netze werden durch eine (optional) vorgeschaltete Kohonenkarte (Orthogonalisierung des Inputs) auf die der sensorische Input und (optional) der Output vom strategiegenerierenden Netzwerk gemildert. Ein backpropagation-Netzwerk wäre möglich aber recht aufwendig und eigentlich unnötig.

Das Netzwerksystem besteht aus 2 Kohonenkarten und 2 hetero- oder autoassoziativen Netzwerken. Die Verschaltung beinhaltet ein grosses Maß an Symmetrie, die für das dynamische Verhalten sehr wichtig ist und bei der Kontrolle des Trainigsvorgangs zu berücksichtigen ist. Auf KK1 (die erste Kohonenkarte) konvergieren S1 (Steuerbefehle), B2 (das assoziative Netzwerk das seinen Input von KK2 (der zweiten Kohonenkarte) und optional B1 (das andere assoziative Netzwerk). Auf KK2 konvergieren S2 (sensorische Werte), B1 und optional B2.

Das Training des Netzwerksytems beschreibt die innere Schleife. Jedes Wertepaar aus sensorischen Werten und den dazugehörigen Steuerbefehlen wird solange den Netzwerken des Netzwerksystems angeboten, bis die Adaption zu einem stabilen Ausgangwert aus den Netzwerken des Netzwerksystems führt. Nun setzt die äußere Schleife ein, in dem die den Netzwerken des Netzwerksystems zugeführten Wertepaare über ggf. vorhandene Kohonenkarten und die nun stabilen Ausgangswerte der Netzwerke des Netzwerksystems an das strategiegenerierende Netzwerk als zu lernende Vektorkombination zugeführt werden. Würden die beiden Schleifen des Trainingsprozesses zeitlich parallel laufen, würde das strategiegenerierende Netzwerk alle "Wackler" aus dem Netzwerksystem, d.h. alle instabilen Zwischenprozesse des Trainings des Netzwerksystems, mitlernen.

Um bekannte Wertepaare von unbekannten Wertepaaren zu unterscheiden, ist erfindungsgemäß vorgesehen, daß die Ausgangswerte der Netzwerke des Netzwerksystems einem Dynamikanalysator zugeführt werden. Anhand der Stabilität der Ausgangswerte der Netzwerke des Netzwerksystems kann dann der Dynamikanalysator erkennen, daß ein bekanntes Wertepaar den Netzwerken des Netzwerksystems zugeführt worden ist.

Das Ergebnis des Dynamikanalysators kann dem strategiegenerierenden Netzwerk neben den Ausgangswerten der Netzwerke des Netzwerksystems und den den Netzwerken des Netzwerksystems als Eingangswerte zugeführten Wertepaaren als weiterer Eingangswert zugeführt werden. Hierbei kann zwischen go-, no-go- oder chaos-Zuständen unterschieden werden. Ein go-Zustand wird bei Stabilität der Ausgangswerte der Netzwerke des Netzwerksystems erkannt. Mit anderen Worten bedeutet dies, daß ein bekanntes Wertepaar erfaßt worden ist. Der chaos-Zustand (vollkommene Instabilität) tritt ein, wenn ein unbekanntes Wertepaar von den Netzwerten des Netzwerksystems behandelt wird. Der no-go-Zustand liegt dynamisch zwischen dem chaos- und dem go-Zustand und ist durch die Ausbildung eines angenäherten Grenzzyklus der Ausgangswerte des Netzwerksystems gekennzeichnet. Der no-go-Zustand signalisiert, daß der momentane sensorische Wert zwar bekannt ist, aber nicht zu dem aktivierten Steuerbefehl paßt. Es kann deshalb vorgesehen sein, daß no-go-Zustände des Dynamikanalysators durch Ignorieren oder Abwenden des Roboters von dieser Konfiguration der sensorischen Werte beantwortet wird. Dadurch gerät der Roboter möglichst schnell wieder in den bekannten Bereich bereits gespeicherter Wertepaare. Der Übergang zwischen no-go- und chaos-Zuständen ist fließend, deshalb können neue Wertepaare ebenfalls teilweise ignoriert werden. Führt das Abwenden und/oder Ignorieren jedoch nicht in den bekannten Bereich zurück, resultiert ein dauerhafter chaos-Zustand. Nun kann die im Netzwerksystem sich entfaltende Chaotik zunehmend das strategiegenerierende Netzwerk beeinflußen und damit völlig neue Aktionen im Sinne von neuen Steuerbefehlen generieren. Noch länger andauernde chaos- und/oder no-go-Zustände könnten auch durch explizite regressive Strategien beantwortet werden. Beispielsweise etwa durch Zurückkehren zu dem Ausgangspunkt des Roboters oder zu demjenigen Punkt, an dem die letzten bekannten Wertepaare erfaßt worden sind.

Da die von der sensorischen Einrichtung erfaßten Werte nicht nur Skalare sein können, sondern auch in Form von Vektoren mit einer Vielzahl von Komponenten auftreten können, werden zur Datenreduktion die von der sensorischen Einrichtung erfaßten Werte und die ebenfalls in Form von Vektoren vorliegenden Steuerbefehle vor Zuführung zu den Netzwerken des Netzwerksystems und/oder vor Zuführung zu dem strategiegenerierenden Netzwerk Kohonenkarten zugeführt.

Zu der Trainingsphase ist im Zusammenhang mit dem Einsatz von Kohonenkarten noch zu bemerken, daß die Synapsen dieser Kohonenkarten während des Trainingsprozesses langsamer adaptieren sollen als die Synapsen der Netzwerke des Netzwerksystems sowie des strategiegenerierenden Netzwerkes, da diese zum Lernprozeß relativ stabile Eingangs- bzw. Ausgangsbeziehungen brauchen. Allerdings kann eine Adaptierung der Kohonenkarte den gesamten Prozeß erleichtern, insofern als die benutzten Netzwerke allein nicht alle Eingangs- bzw. Ausgangsbeziehungen nachbilden können.

Des weiteren ist zu bemerken, daß es vorteilhaft ist, die ggf. vorhandenen Kohonenkarten sich fortlaufend oder zumindest intermittierend synaptisch adaptieren zu lassen. Damit bilden die Kohonenkarten die Statistik der steuerbefehle und der sensorischen Werte erfolgsunabhängig ab, um den Roboter "kognitiv" an das vorherrschende Terrain bzw. die gestellten Aufgaben anzupassen.

Die von der sensorischen Einrichtung erfaßten Werte sowie die dazugehörenden Steuerbefehle werden neben der Zuführung zu dem strategiegenerierenden Netzwerk und den Netzwerken des Netzwerksystems einem Kurzzeitgedächtnis zugeführt, wo sie abgelegt werden. Wird ein den Netzwerken des Netzwerksystems neu zugeführtes Wertepaar als bekanntes Wertepaar identifiziert, so erfolgt eine Verknüpfung dieses als bekannt erkannten Wertepaares mit den Wertepaaren einer zum Erfolg geführten Kette von Wertepaaren, wobei die Wertepaare, die vor dem gerade eben als bekannt erfaßten Wertepaar den Netzwerken des Netzwerksystems zugeführt worden sind, ebenfalls an der bereits bekannten Kette angeknüpft werden. Bei diesem solcher Art gesteuerten Lernprozeß werden fast ausschließlich neue Wertepaare an die in der anfänglich durchgeführten Trainingsphase gespeicherten Wertepaare angehängt. Mit anderen Worten werden nur bereits angelegte Verhaltenselemente (die anfänglich eintrainierten Wertepaare) verbessert und weiterentwickelt. Besteht die Möglichkeit, durch externe Belohnung unabhängig von der Bekanntheit oder Neuheit von Wertepaaren einen dem oben beschriebenen gleichartigen Trainingsprozeß initiieren zu können, kann man auch noch später gezielt in das Lernverhalten eingreifen. Die beobachterunabhängige Formulierung von Belehrungskriterien läuft auf das Training einer schon spezifizierten Untermenge von Wertepaaren hinaus. Diese Belehrungskriterien wurden ja initial schon als Wertepaare eingespeichert.

Es kann hierbei sinnvoll sein, alle möglicherweise eingesetzten Kohonenkarten fortlaufend oder in regelmäßigen Abständen einem, wenn auch relativ wenig intensiven Trainingsprozeß unabhängig von den Erfolgskriterien zu unterwerfen. Die Statistik von Umgebung und Handlung wird damit synaptisch abgebildet und damit der Roboter gezwungen, sich "kognitiv" auf seine Umgebung und Aufgaben einzustellen. Dadurch werden Lernprozesse beschleunigt. Umgekehrt sollten die Kohonenkarten beim erfolgsinduzierten Training synaptisch relativ stabil bleiben, da ihr Ausgang (= Output) ja den Eingang (= Input) für die nachgeschalteten Netzwerke darstellt, die in dieser Phase die Input/Output-Assoziation herstellen sollen. Eine gewisse Plastizität der Kohonenkarten erleichtert hierbei den Trainingsprozeß für das strategiegenerierende Netzwerk und die Netzwerke des Netzwerksystems.

Wie bereits vorstehend darauf hingewiesen worden ist, werden in einer Trainingsphase dem strategiegenerierenden Netzwerk und den Netzwerken des Netzwerksystems ausgewählte Wertepaare, die aus von der sensorischen Einrichtung möglicherweise zu erfassenden Werten und den dazugehörenden Steuerbefehlen bestehen, zugeführt. Innerhalb dieser Trainingsphase bilden sich dann in den Netzwerken zugehörige Synapsenstärken aus.

Um das geforderte Verhalten des Netzwerksystems zu erhalten, kann der Lernprozeß und die Gewichtung der Synapsen gemäß folgendem vereinfachten Beispiel, das ein Spezialfall der bisherigen Beschreibung darstellt, gestaltet werden.

Die Kohonenkarten sind in der üblichen Weise realisiert (Ritter et al.): Die Intensität des Inputs $x_i$ ist normiert $\|x\| = 1$ wie die Stärke der Synapsen $\sqrt{\Sigma w^{e,i}}_{rl} = 1 \quad (2)$

unabhängig für S1,S2-input ($w^e_{rl}$, e für extern) and B2,B1 input ($w^i_{rl}$ für intern); das heißt $\sqrt{\Sigma w^e}_{rl} = \sqrt{\Sigma w^i}_{rl} = 1$, $x(K1) = x(S1^e, B2^i)$; $x(K2) = x(S2^e, B1^i)$ (nur der überkreuzte B 2/1 Ausgang ist hier realisiert). Die Lernregel $\Delta w_{rl} = \varepsilon(h_{rr'}xl - h_{rr'}w_{rl})$ ist vereinfacht zu $\Delta w_{rl} = s$ wenn $\delta (r-r')(x_l - w_{rl}) >= 0$ sonst $-s$ ($s$ = Lernschritt). $w_{rl} \in [0,1]$; $h_{rr'} = \exp(-(r-r')^2/2\sigma^2)$ bezeichnet den Fleck neuronaler Aktivität um das maximal aktivierte Element r' herum;

Die Netzwerke B1, B2 führen (zur Vereinfachung der Berechnung bzw Simulation ein Pascal Programm liegt vor) die Identitätstransformation durch. Der Input zu B1/2 ist gegeben durch

$x_l = 1$ für $l = r'$ sonst 0 ; $y_l = c^* x_l$ ; $c = 1+$ C'(sin(C''t)+C'''rs) während der online Phase, c = 1 während des Training (C', C'', C''' sind Konstanten, die die Amplitude synchroner und asynchroner Fluktuationen von yl und rs (= stochastisches Rauschen) zur Destabilisierung eventuell vorhandener Symmetrien beschreiben).

Unter diesen Umständen bleiben die Ausgangsmuster der Netzwerke KK1 und KK2 völlig stabil, der der Netzwerke B1/2 beschreibt die oben beschriebenen Fluktuationen (man könnte auch die Amplituden S1S2 analog fluktuieren lassen. Dann könnten B1/2 ebenfalls völlig stabil bleiben.

Folgende Erweiterungen und Variationen dieses Schemas - innerhalb der allgemeinen Netzwerkbeschreibung - bieten sich an:

1) Statt der identischen Transformation kann die Position und Aktivitätsgrad des aktiven Neurons (oder Cluster) der vorgeschalteten Kohonenkarte KK1/2 von B1/2 auch anders kodiert werden. Dabei können sowohl im Verhältnis höher- oder niederdimensionale Räume der Ausgangswerte verwendet werden. Die Abstände d im Kodierungsraum K ( nach der Transformation von Position n und deren Aktivität AKn nach K) sollten aber möglichst gleich und maximal voneinander sein d. h.so orthogonal wie möglich sein. Im einfachsten Fall könnte die Position des aktiven Neurons als (binäre) Zahl codiert sein.

2) Auch die Synapsen von B1/2 können geändert werden solange der normierte Ausgangswert sich nicht stärker als d/2 dem nächsten Nachbarn annähert. Solche Veränderungen können den Lernprozeß vereinfachen bzw. verkürzen. Die (normierte) Änderung des Ausgangswertes B1/2 soll $\sqrt{\Sigma w^i}_{rl} x_B$ maximieren. Betrachtet man $w^i_{rl}$ als Vektor (der Index r fürs Neuron wird unterdrückt) heißt das, daß $w^i_{rl}$ und output von B in die gleiche Richtung zeigen sollen (Maximierung des inneren Produkts). Daraus kann man die Änderung von B berechnen (abgesehen durch die Einfügung von Versuch und Irrtum-Schleifen).

3) Eine Destabilisierung des Netzwerksystems bei neuen Mustern kann auch durch (leichte zeitliche) Hochpaßfilterung der S1,S2, B1,B2 - Signale erfolgen. Hierbei ist es allerdings notwendig, daß interne und externe Signale asynchron auf die Kohonenkarten konvergieren.

4) Ausgehend von dieser lokalen Beschreibung der Lernregeln für die einzelenen Netzwerke erfolgt die globale Beschreibung des Lernprozesses:
Ein neues S1S2 wird angeboten. Aus den instabilen Aktivitätsmustern eines Testlaufs sucht man entweder das häufigste Paar (KK1 und KK2 gleichzeitig betrachtet!) bzw. in Analogie zum Neuron r' im üblichen Trainingsprozeß einer Kohonenkarte das Paar r' dessen Response zu S1S2 und den gekreuzten B2/1 outputs maximal ist ( der Zeitverzug (delay) durch die Transformation der B1/2 sei vernachlässigt). Dieses Paar wird ausgewählt, der Lernprozeß in jeder Karte erfolgt nun wie üblich zuzüglich der oben beschriebenen Normierungsbedingung (gleiche Gewichtung gekreuzten und ungekreuzten Inputs). Durch diese Auswahl wird auch erreicht, daß für die Speicherung eines neues Paares die Synapsenstärke insgesamt am wenigsten verändert wird. Zusammenfassend sollte Auswahl des Neuronenpaares r' wie Änderung der Synapsen in B1/2 so erfolgen, daß die gesamte Änderung der Synapsenstärken (in allen Netzwerken) bis zur Stabilisierung des Ausgangsmusters minimal ist, also die alten Repräsentationen möglichst wenig stört. Ggf. können sich weitere Zyklen von Testlauf , Paarauswahl und Synapsenadaptation anschließen.

Die vorstehende Aufgabe wird vorrichtungsgemäß mit den Merkmalen des Anspruchs 9 gelöst. Diese vorrichtungsgemäße Lösung weist die gleichen Vorteile auf, wie sie im Zusammenhang mit dem erfindungsgemäßen Verfahren geschildert worden sind. Zum Aufbau des Netzwerksystems ist zu bemerken, daß die Ausgangswerte jedes einzelnen Netzwerkes des Netzwerksystems der zu dem jeweiligen Netzwerk gehörenden Kohonenkarte sowie der Kohonenkarte des benachbarten Netzwerkes zugeführt werden können. Bei Verwendung mehrerer, parallel nebeneinander angeordneter Netzwerke können die Ausgangswerte jedes Netzwerkes wiederum den Kohonenkarten der benachbarten bzw. der anderen Netzwerke zugeführt werden.
Der Dynamikanalysator führt dabei eine Fourieranalyse der Ausgangswerte der Netzwerke des Netzwerksystems und der zugeführten sensorischen Werte bzw. der Steuerbefehle mit anschließendem spektralen Vergleich durch. Sind die Spektren der zugeführten Werte gleich wird ein go-Zustand signalisiert. Enthalten die Ausgangwerte der Netzwerke des Netzwerksystems vorwiegend harmonische Obertöne des Spektrums der zugeführten sensorischen Werte bzw. der Steuerbefehle wird ein no-go-Zustand signalisiert. Sind die Spektren der Ausgangswerte der Netzwerke des Netzwerksystems und der sensorischen Werte bzw. der Steuerbefehle völlig ohne Gemeinsamkeit wird ein chaos-Zustand signalisiert.

Die Suche im Fourierraum ist durch die Abtastfrequenz und durch die Breite des betrachteten Intervalls bestimmt. Die Zuordnung der Zustände kann hierbei durch (beispielsweise vom strategiegenerierenden Netzwerk generierte) Variation der Zuweisung der relativen spektralen Amplituden zu den Zuständen optimiert werden. Da sowohl die Ausgangswerte des Netzwerksystems als auch die Wertepaare mehrkomponentige Vektoren sind, müßten theoretisch alle ihre Vektorkomponenten einer Fourieranalyse unterzogen werden. Welche Komponenten der Wertepaare mit welchen Komponenten der Ausgangswerte des Netzwerksystems in ihrer Dynamik verglichen werden, kann allerdings willkürlich sein. Beispielsweise könnte ein Netzwerk aufgrund beliebiger noch anzugebener Kriterien (Korrelation von Wertepaar-Komponenten mit Komponenten der Ausgangswerte des Netzwerksystems?) diese Zuordnung durchführen. Einfacher ist es, zumindest alle Spektralamplituden wenigstens der Wertepaare (als relativ stabil vorausgesetzt) ggf. gewichtet und renormiert zu addieren. Für die Werte aus den Netzwerken des Netzwerksystems kann ebenso verfahren werden. Es ist aber auch möglich, das Spektrum einer Komponente eines Ausgangswertes der Netzwerke des Netzwerksystems mit dem zusammengefaßten Spektrum der Wertepaare zu vergleichen und komponentenweise den go, no-go- oder chaos-Zustand zu erheben. Zur Reduktion des Rechenaufwandes könnte man sowohl die Wertepaare als auch die Ausgangswerte der Netzwerke des Netzwerksystems in einen Unterraum projizieren, oder andere Verfahren der Dimensionsreduktion durchführen (extrem: Spur S1*S2; Spur B1*B2 usw.), und anschließend Fourieranalyse sowie Spektralvergleich durchführen. Wegen der unzähligen Möglichkeiten und des potentiell großen Aufwands wird noch als Vorschlag eine primitive Fourieranalyse vorgestellt.

Die Wertepaare und die Ausgangswerte der Netzwerke des Netzwerksystems werden in getrennte Schieberegister eingelesen und auf Periodizität untersucht. Dies geht folgendermaßen. Ein Wertepaar oder ein Paar an Ausgangswerten wird mit einem zeitverschobenen Paar verglichen. Wenn die (euklidische-, Manhattan Distanz -Vektoren) Abweichung kleiner ist als die Schwelle s, gibt es einen Punkt.
Die Punktzahl ergibt sich über die doppelte Summation der Elemente i des Schieberegisters bis y und der Variation der Zeitverschiebungen n von 1 bis y/2.
$p = \Sigma_i \Sigma_n fi (xr1) + fi(xr2)$ , wobei $fi (xr) = 1$ wenn /xi-xr/<-s , sonst O.
r1 = n+i modulo y , r2 = 2n+i modulo y , i - 1 bis y; n - 1 bis y/2, $x_i$ = eingelesener Vektor in Position i des Schieberegister
Dieser Prozeß wird getrennt für die Wertepaare und die Ausgangswerte der Netzwerke des Netzwerksystems durchgeführt. Die Differenz der Punktzahlen der Wertepaare und der Ausgangswerte ist maximal = 0, wenn die Ausgangswerte des Netzwerksystems so stabil wie die Wertepaare sind. Ansonsten wird die Differenz um so negativer, je chaotischer sich die Ausgangswerte gegenüber den Wertepaaren verhält. Die Ausbildung von harmonischen der Ausgangswerte des Netzwerksystems würde zu (negativen) Mittelwerten führen. An dieser Differenz kann die Klassifikation der Dynamik des Netzwerksystems erfolgen.

Das Kurzzeitgedächtnis ist vorzugsweise als Schieberegister ausgebildet, so daß die neu hinzugekommenden Wertepaare die zeitlich ältesten abgespeicherten Wertepaare aus dem Schieberegister entfernen.

Weiterhin ist zu bemerken, daß die Intensität des Trainings (= Lernzyklen) sich in Abhängigkeit des Verhältnisses bzw. der Differenz von Belohnung und aufgelaufenen Kosten, die ggf. Energiekosten sein können, gestalten kann. Damit werden nur Wertepaare mit positiver Energiebilanz trainiert bzw. gelernt (= zusätzliches Selektionskriterium). Damit Wertepaare über das Fassungsvermögen des ggf. vorhandenen Kurzzeitgedächtnisses hinaus trainiert werden können, müssen bekannte und gespeicherte Wertepaare mit einem Belohnungswert assoziiert werden, der die Weiterverteilung der Belohnung an die anschließenden Kettenglieder ermöglicht. Hierzu gibt es mehrere Möglichkeiten. Beispielsweise wird von der "Belohnung", wie die zugeführte Energie usw., dem ersten Wertepaar dessen "Kosten", wie beispielsweise die zur Erreichung der momentanen Situation aufgewandte Energie usw., abgezogen und das Resultat als Belohnungswert zugewiesen und gespeichert (ggf. als zusätzliche Steuerbefehlskomponente, die nur zum Kurzzeitgedächtnis projeziert wird). Dem nächsten zu speichernden Wertepaar wird dieser Werte als Bruttobelohnung zugewiesen, wobei wiederum die jeweiligen Kosten abgezogen werden usw.

Eine ähnliche Form läßt sich dadurch erreichen, daß Belohnungsverteilung und Anlaufkosten über mehrere aufeinanderfolgende Wertepaare hinweg aufsummiert bzw. gesammelt werden und der resultierende Durchschnittswert auf die Wertepaare verteilt wird. Dieses Verfahren ergibt aber einen schlechten Gradienten, der allerdings durch die Überlagerung vieler Lernprozesse sich verbessert. Ein relativ hoher Gradient läßt sich dadurch herstellen, daß der Nettogewinn der im Kurzzeitgedächtnis gespeicherten Wertepaare mit einer entsprechenden Formel verteilt wird.

Des weiteren ist zu bemerken, daß direkt nach den Sensoren der sensorischen Einrichtung bzw. vor den ggf. vorhandenen Kohonenkarten des strategiegenerierenden Netzwerkes bzw. den Kohonenkarten des Netzwerksystems sowie dem Kurzzeitgedächtnis Bandpaßfilter angeordnet sein können.

Dabei werden die Bandpaßfilter verwendet, um die zeitlichen Komponenten von Signalen, auf die die nachgeschalteten Systeme kaum oder nur schlecht reagieren, auszufiltern. Der Filter hat im wesentlichen zwei Parameter, die zentrale Frequenz seines Durchlaßbereiches und die Bandbreite. Die Steuerung der Zentralfrequenz sowie die Bandbreite erfolgt durch den Dynamikanalysator. Die Bandbreite wird von der Netzwerk-Konfiguration, das die so gefilterten Werte erhält, während eines go-Zustandes erhöht, wogegen sie bei no-go- bzw. chaos-Zuständen verringert wird.

Ist die vorgeschlagene Erfindung Bestandteil eines größeren Netzwerksystems so kann es sinnvoll sein, zwischen den einzelnen Hierachien dieses Großnetzwerksytems ebenfalls Bandpaßfilter einzusetzen. Der Ausgang nach oben, der meistens gleich dem Eingang von unten ist, soll ebenfalls gefiltert werden. Das übergeordnete Netzwerk braucht über das untergeordnete nur wenig zu wissen, wenn der Betrieb ohne Störung verläuft. Erst wenn Probleme auftreten, sollte es mehr wissen. Der dazwischenliegende Bandpaßfilter sollte unter diesen Umständen geöffnet werden (= chaos-Zustand), ansonsten in seiner Bandbreite reduziert werden. In der Hierarchie werden vor- und nachgeschaltete Bandpaßfilter unmittelbar gekoppelt und können bei entsprechender Konvergenz und Verrechnung der Steuerbefehle von unten und oben zusammengefaßt werden. Dabei können die aus dem hierachisch höher angeordneten Netzwerk und zeitverzögerte Signale aus dem Kurzzeitgedächtnis der gleichen Hierachie ebenfalls über einen Bandpaßfilter laufen.

Weiterhin ist zu bemerken, daß zeitverzögerte Wertepaare aus dem Kurzzeitgedächtnis dem strategiegenerierenden Netzwerk und der Kohonenkarte des Netzwerkes des Netzwerksystems, das die Steuerbefehle empfängt, angeboten bzw. zugeführt werden. Hieraus ergibt sich der Vorteil, daß die Netzwerke zeitlichkausale Beziehungen zwischen den Wertepaaren entdecken und speichern können. Die Kompetenz des Systems entlang der Zeitachse steigt. So können nun zeitversetzte Signale abwesende sensorische Werte partiell ersetzen und so die Abhängigkeit des Sytems und dessen Strategien von den momentanen sensorischen Werten reduzieren, wodurch das Verhalten stabilisiert werden kann. Das Netzwerksystem kann nun Wertepaare in Beziehung zu ganzen Netzwertepaarketten setzen. Eine zeitverzögerte Rückführung wäre auch für das Netzwerksystem geeignet, um ganze Ketten zu lernen und damit solche des strategiegenerierenden Netzwerkes zu modulieren. Es ist sinnvoll die Rückführung zeitverzögerter Wertepaare von der Situation - insbesondere go-, no-go-, chaos-Zustand - abhängig zu machen. Bei länger bestehenden chaos-Zustand sollte die Rückführung reduziert werden (durch Reduktion von Bandbreite, Zeitverzögerung (falls mehrere berücksichtigt werden), Anzahl der Komponenten usw.) dadurch kommt es zur Konzentration auf das hier und jetzt.

Werden durch no-go-Zustände vorwiegend Vermeidungsreaktionen (Abwenden, Ignorieren), die oft am schnellsten in den go-Zustand zurückführen, ausgelöst, setzt sich der Roboter nicht genug mit Neuem auseinander. Diskriminationsvermögen und Verhaltensrepertoire stagnieren. Um dies zu vermeiden, muß man ausreichend lange chaos-Zustände erzwingen. Dies wird durch ein übergeordnetes Rechenwerk bzw. einen Computer erreicht. On-line Explorationsphase: Treten innerhalb eines typischen Zeitraums nicht genug chaos-Zustände auf (Summation über "leaky integrator") induziert das Rechenwerk den chaos-Zustand, indem die für eine Aufgabenstellung spezifischen Komponenten (aufgrund der initialen "Programmierung" bekannt) eines Aufgabenvektors (es können mehrere mehrkomponentige Aufgabenvektoren vorliegen, die sowohl Komponenten enthalten, die allen oder einigen Aufgabenvektoren gemeinsam sind, als auch Komponenten, die nur in einem Aufgabenvektor enthalten sind) durch stoachastische Variablen ersetzt werden. Durch diese neuen stochastischen Variablen werden neue Wertepaare erzeugt, die ausschließlich im Netzwerksystem gespeichert werden. Dadurch kommt es u.a. zu geringfügigen Modifikationen der Kohonenkarten der Netzwerke des Netzwerksystems. In erster Linie werden die Wertepaare aber den ähnlichsten bereits gespeicherten Mustern, gemäß der Variation der spezifischen Komponente des Aufgabenvektors im Grunde zufällig, zugeordnet.

Gemäß der Aufgabendefinition durch Plazierung des Roboters in einem bestimmten Bereich des (S1S2) Raumes der Wertepaare kennzeichnet der Aufgabenvektor den entsprechenden Unterraum. Der Einfachheit halber - der Roboter kann sich nur durch Bewältigung der so definierten Aufgabe aus diesem Unterraum befreien - stellen für den Roboter die Komponenten der Wertepaare, die über einen längeren Zeitraum konstant bleiben einen Aufgabenvektor dar und können vom Kurzzeitgedächtnis als abgeleitete Größen identifiziert und markiert werden. Kontext- und aufgabenspezifische Information werden so praktisch identisch behandelt. Kontextinformation ist hier nun komplementär zu den Komponenten aufgefaßt die unmittelbar durch die sensomotorischen Actionen des Roboters verändert werden.

Der Sinn des Ersetzens kontext/aufgabenspezifischer komponenten durch stochastische Werte aus der Vereinigung aller der so definierten Unterräume ist das vor allem die Sequenzen sensomotorischer Reaktionen, die besonders widerstandsfähig gegen diese Störung sind nun mit anderen Kontextmarkern (stochastisch ersetzte Kontextinformation) ablaufen können. Dies ist Voraussetzung zur Übertragung sensomotorischer Routinen in einen neuen Kontext bzw. in ein neues Aufgabenfeld. Die Wahrscheinlichkeit zur Erhaltung solcher Routinen ist dann besonders gut, wenn nur ein Teil der möglichen Komponeten ersetzt wird. Und zwar so, daß der Abstand des veränderten Wertepaars zum unveränderten Wertepaar im Bereich der Auflösung des strategiegenerierendes Netzwerks liegt. Sei Ak der dynamische Bereich in dem die Kontextkomponenten variieren und A0 der in den Kohonenkarten repräsentierte Dynamikbereich so sollte sehr grob k (Anzahl der zu variierenden Kontextkomponenten) durch k < A0/Ak gegeben sein. Für kontextunabhängige Muster gilt diese Einschränkung praktisch nicht, da $\Sigma w_{ik} \Delta x_k$ klein gegen

die Auflösung der Karte ist ($\Delta x_k$ Bereich der varierten Kontextkomponenten über den summiert wird).

$p = 1/nr$ wenn $\Sigma w_{iy} x_{S1} \approx \Sigma w_{ij} x_{S2}$ für das "richtige" Neuron i in der Kohonenkarte KK2 and KK3. 1/nr ist die Anzahl der Neurone um Neuron i, die etwa gleiche S1 - aber verschiedene S2 -Werte representieren. $x_{S1}$ sind die S1-Komponenten summiert über v, $x_{S2}$ sind die S2-Komponenten summiert über j. Wenn die Intensität der stochastischen S2 sehr niedrig ist, geht p gegen 1, wenn die Intensität groß ist, geht p gegen 1/n (Anzahl der Neurone in der Kohonenkarte).

Sollten Energiemangel, akute Bedrohungen oder Anforderungen, Erschöpfung der Speicherkapazität des Netzwerksystems auftreten, wird die Explorationsphase ebenso abgebrochen wie bei erfüllter chaos-Zustands-Quote. Ansonsten auftretende Gefahren bei der Exploration werden so vermieden.

Off-line Wissentransfer Phase: Diese wird vom Rechenwerk bei erfülltem chaos-Zustandskontingent und bei erschöpfter Speicherkapazität des Netzwerksystems ausgelöst, indem die Handlungseinheiten und sensorischen Einrichtungen sowohl von dem Netzwerksystem als auch dem strategiegenerierenden Netzwerksystem abgekoppelt werden. Die sensorischen Daten der sensorischen Einrichtung werden durch stochastische Variablen ersetzt. Die auf Grund dieser stochastischen Variablen erzeugten Steuerbefehle des strategiegenerierenden Netzwerksystems werden dem Netzwerksystem als weitere Eingangsdaten zugeführt. Aus der Sicht des strategiegenerierenden Netzwerkes ersetzen diese Variablen und das im Netzwerksystem gespeicherte Wissen die physische Interaktion mit der Umwelt. Die stochastischen Variablen sorgen dafür, daß möglichst viele Wertepaare durchgespielt werden. Durch diese Interaktion des Netzwerksystems (indem auch die Variablen gespeichert sind) mit dem strategiegenerierenden Netzwerk wird indirekt Wissen aus der Explorationsphase nun gemäß der Ähnlichkeit der die sensorischen Daten ersetzenden stochastischen Variablen mit den von dem strategiegenerierenden Netzwerk auf Grund dieser stochastischen Variablen erzeugten steuerbefehlen zu bereits im strategiegenerierenden Netzwerk gespeicherten Wertepaaren ins strategiegenerierende Netzwerk übertragen. Der springende Punkt bei diesem Prozeß ist, daß in dem Netzwerksystem nicht vollständig die gleichen Muster wie im strategiegenerierendem Netzwerk gespeichert sind. Wäre dies der Fall, würden beide Strukturen synchron agieren und sich gegenseitig stabilisieren. Dieses Gleichgewicht zwischen Netzwerksystem und strategiegenerierenden Netzwerk wird durch stochastische Variablen immer wieder (kurzfristig) gestört, wenn sie von dem Netzwerksystem als ein aus der Explorationsphase stammendes Wertepaar interpretiert werden.

Die Intensität der stochastischen sensorischen Werte begrenzt somit die Wahrscheinlichkeit für die Fortführung bereits gespeicherter Abfolgen von Wertepaaren (S1S2-Kette). Sie ist sehr grob gegeben (p = Wahrscheinlichkeit der Fortführung): $p = 1/nr$ wenn

$\Sigma w_{iy} x_{S1} \approx \Sigma w_{ij} x_{S2}$ für das "richtige" Neuron i in der Kohonenkarte KK2 und KK3. nr ist die Anzahl der Neurone um Neuron r,die etwa gleiche S1 - aber verschiedene S2 -Werte repräsentieren.$x_{S1}$ sind die S1-Komponenten summiert über v,$x_{S2}$ sind die S2- Komponenten summiert über j. Wenn die Intensität der stochastischen S2 sehr niedrig ist, geht p gegen 1, wenn die Intensität groß ist, geht p gegen 1/n (Anzahl der Neurone in der Kohonenkarte).

Sie ist damit ein Tuning-Parameter für die Länge der so entstehenden Bruchstücke solcher Ketten, die nun durch ihre Abfolge während der Offline-Phase aneinander gefügt werden. Wieder sind solche Routinen bevorzugt, die relativ unabhängig von externen sensorischen Umständen sind. Also vorwiegend durch Reafferenzen ((zeitverzögertes) Feedback) kontrollierte Abfolgen von Wertepaaren.

Werden in dem Netzwerksystem durch Steuerbefehle und stochastische Variablen Wertepaare aus der Explorationsphase entsprechende Muster (nur dieser Fall wird im weiteren diskutiert) aktiviert, passiert folgendes. Die resultierenden Ausgangssignale aus den Netzwerken des Netzwerksystems und des Dynamikanalysators sind dem strategiegenerierenden Netzwerk im allgemeinen unbekannt und destabilisieren dessen Dynamik, insbesondere die resultierenden steuerbefehle. Das strategiegenerierende Netzwerk wird so gewissermaßen von dem Netzwerksystem dominiert, das nur einem instabilen selektierenden steuerbefehl unterliegt, bis ein dem strategiegenerierenden Netzwerk bekannter, aufgabenspezifischer Ausgang des Netzwerksystems an dem strategiegenerienden Netzwerk anliegt und zusammen mit Steuerbefehl und stochastischen Variablen dessen Dynamik stabilisiert. (Ausgabe eines stabilen Steuerbefehls mit entsprechender Selektionswirkung). Innerhalb der klassifikatorischen Diskriminationsfähigkeiten des strategiegenerierenden Netzwerkes und dem Netzwerksystem wird so die Dynamik einer Teilmenge von Wertepaaren aus der Explorationsphase nun auch vom strategiegenerierenden Netzwerk nachvollzogen. Hierbei wählt gemäß "best fit"-Kriterium der Steuerbefehl unter den in der einem Netzwerk des Netzwerksystems vorgeschalteten Kohonenkarte repräsentierten Steuerbefehlen aus der Explorationsphase und die stochastische Variable unter den in der anderen Kohonenkarte repräsentierten sensorischen Muster aus der Explorationsphase aus. Die gleichzeitig an den Ein- und Ausgängen des strategiegenerierenden Netzwerkes anliegenden Ausgänge des Netzwerksystems, der stochastischen Variablen und den Steuerbefehlen stellen die Rekonstruktion der Wertepaare aus der Explorationsphase dar. Die Reaktion des strategiegenerierenden Netzwerkes erfolgt natürlich ebenfalls gemäß "best fit"-Kriterium. Die aus dieser Interaktion resultierenden Wertepaare und Ausgänge des Netzwerksytems sollen nun in dem strategiegenerierenden Netzwerk und dem Netzwerksystem gespeichert werden.

Vorher können während der Offline-Phase auftretende Wertepaare, die vom Netzwerksystem als unbekannt klassifiziert werden ausgesondert werden.

Die off-line-Phase wird bei akuter Gefährdung oder Aufgabenstellung ebenso abgebrochen wie nach dem Ablauf der für diesen Prozeß eingeräumten Zeitspanne, die proportional der aufgelaufenen chaos-Zustände mit dem Explorationszeitraum vergleichbar ist.

Erreicht wird hierdurch, daß eine Teilmenge der aus der Explorationsphase stammenden Wertepaare gemäß des "best fit"-Kriteriums ins strategiegenerierende Netzwerk übertragen wird. Es findet also ein crossing-over von explorativen Erfahrungen in aufgabespezifische Wertepaaren statt. Das neue Repertoire wird während aufgabenspezifischem Verhalten in üblicher Weise selektioniert.

Im allgemeinen wird während der off-line-Phase nur eine Teilmenge der aus der Explorationsphase stammenden Wertepaare und der aufgabenspezifischen Wertepaare reproduziert. Die übrigen Wertepaare könnten einem beschleunigtem "Vergessensprozeß" unterliegen. Dadurch wird Platz für neue Wertepaare geschaffen und die durchgespielten Werte gewinnen eine höhere Priorität. Man kann diesen Prozeß der Straffung unterstützen, indem während der off-line-Phase auftretende Wiederholungen innerhalb der Reichweite des Kurzzeitgedächtnisses mitsamt den dazwischen liegenden Wertepaaren vom anschließenden Trainingsprozeß ausgeschlossen werden. Weiteres Ausschlußkriterium wäre z.B. zu starke Instabilität der Muster. Der hier beschriebene Prozeß - insbesondere die off-line-Phase - kann in einem System bestehend aus strategiegenerierende Netzwerke und Netzwerksysteme beinhaltenden Modulen autonom ablaufen, während andere Module Basisinteraktionen mit der Umwelt aufrecht erhalten können.

Um die Begrenzungen der vorhandenen Neurochips zu überwinden, können mehrere Neurochips in paralleler, hierarchischer oder gemischt parallel/hierarchischer ("fraktaler") Anordnung kombiniert werden. Die Dimensionalität der Verbindungen zwischen den Netzwerken bzw. den so entstandenen Modulen solcher Anordnungen ist dabei immer niedriger als innerhalb der Netzwerke selbst. Diese geringere Dimensionalität kann für höhere Stabilität und gezieltere sowie schnellere Optimierung genutzt werden. Es muß aber berücksichtigt werden, daß nicht zu viel Flexibilität verloren geht. Um die vermehrte Anzahl an Modulen und Netzwerken gut zu nutzen, ist es vorteilhaft, daß jedes Modul schwerpunktmäßig einen anderen Bereich der Koordination von sensorisch erfaßten Werten und ausgegebenen Steuerbefehlen kontrolliert. Es wird ein topographisches System eingeführt. Dies bedeutet, daß die Steuerbefehle eines Moduls dorthin zurück gehen, wo die sensorische Information herstammt bzw. wo eine maximale Korrelation besteht, falls dies nicht auslegungsmäßig klar sein sollte.

Das topographische Prinzip wird auch innerhalb von Hierarchien von Netzwerken durchgehalten; der Feedback bzw. die Steuerbefehle gehen dorthin, wo die Information herkommt. Dabei können auch Hierarchiestufen übersprungen werden, die Bindung an den entsprechenden Abschnitt der Koordination von sensorisch erfaßten Werten und ausgegebenen Steuerbefehlen bleibt aber erhalten.

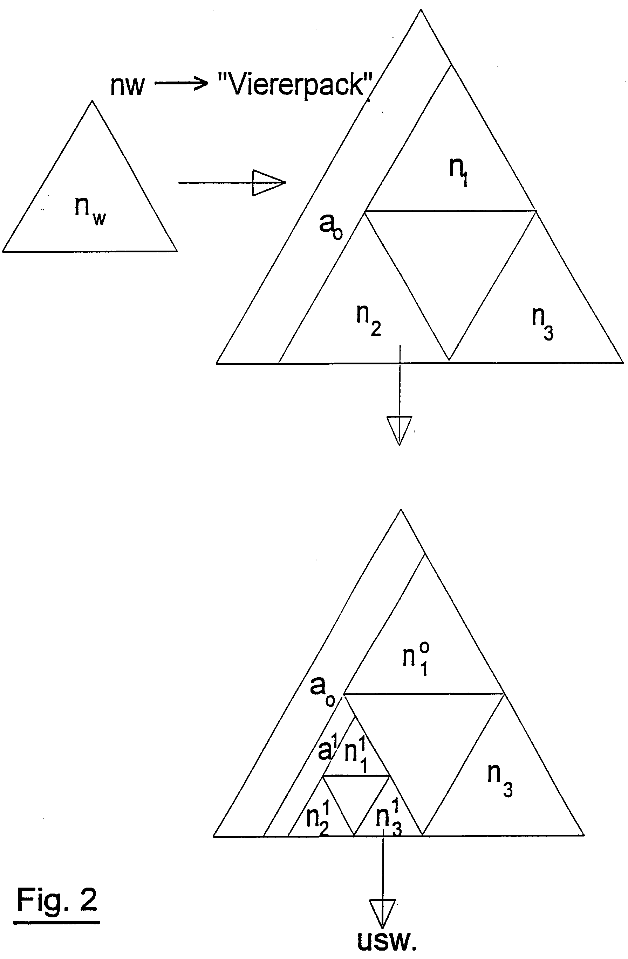

Der Begriff "hierarchisch" definiert sich hierbei über die Beziehung der Signale zu den Kohonenkarten eines strategiegenerierende Netzwerkes. Ein Signal von "unten" passiert analog der sensorischen Information eine solche Kohonenkarten, Signale von "oben" gehen direkt an das strategiegenerierende Netzwerk. Die Verschaltung des zugehörigen Netzwerksystems hat damit primär nichts zu tun. Als Standard weisen die Netzwerksysteme der verschiedenen strategiegenerierende Netzwerke keine Verbindungen untereinander auf. Als Option wäre es möglich, unter den Netzwerksystemen genau zu den verbundenen strategiegenerierende Netzwerke analoge Verbindungen aufzubauen (sh. auch Fig. 2).

Gemischt parallel hierarchisch heißt, daß zwischen den Netzwerken u.a. auch hierarchische Beziehungen bestehen aber gleichzeitig diese Netzwerke (auszugsweise) direkten Zugang zur gleichen "sensorischen" Information haben und gemeinsam Steuerbefehle an die gleiche Substruktur richten.

"Fraktale" Organisation heißt, daß innerhalb eines Gefüges von strategiegenerierende Netzwerken jedes einzelne durch eine dem Gefüge analoge Kombination von Netzwerken ersetzt werden kann.

Besonders vorteilhaft ist in diesem Zusammenhang der Einsatz einer gemischt parallel/hierarchisch/fraktalen Anordnung mit erfolgsbelohnten Lernprozesse und bedarfsabhängigen Ersetzen bei häufigen chaos-Zuständen des betreffenden Netzwerks bzw. Netzwerksystems durch eine gemischt hierarchisches Viererpack.

Steuert ein paralleles oder hierarchisches System aus strategiegenerierende Netzwerk-Modulen z.B. ein Ensemble von Schrittmotoren eines mehrgelenkigen Arms, ist es unvermeidbar, daß die Steuerbefehle an einen Schrittmotor auch Folgen für die übrigen Gelenke haben, speziell für die Position des Endglieds. Insbesondere bei einer topographischen Aufteilung der Arbeit auf verschiedenen Netzwerke muß sich z.B. ein Netzwerk b mit den Folgen der Steuerbefehle eines Netzwerks a befassen, obwohl die eigentliche Ursache bei Netzwerk a liegt. Deshalb kann Netzwerk b diese Folgen nur in Grenzen kompensieren. Damit die Stabilität gewährleistet wird, muß Netzwerk a auch über die unerwünschten Nebeneffekte seiner Steuerbefehle informiert werden. Wegen der reduzierten Dimensionalität der Kommunikation zwischen den Netzwerken a und b (evtl. ist noch ein Netzwerk c oder mehr dazwischengeschaltet) dauert dies zur Aufrechterhaltung der Steuerstabilität zu lange. Man braucht also ein System, das diese unerwünschten Koppelungen der Steuersätze mit ihren dynamischen Folgen kompensiert ("Kleinhirn").

Das System muß die mangelnde Konnektivität zwischen Netzwerk a und b sowie deren unter Umständen zu große Zeitkonstante kompensieren. Damit das System nicht unnötige Arbeit leistet, ist es sinnvoll, das System vom Zeitverhalten so auszulegen, daß es nur die schnellen Korrekturen ausführt, die das zusammengesetzte Netzwerk nicht beherrscht. Auf der anderen Seite begrenzt die Trägheit der Stellglieder die obere Grenzfrequenz von dem System. Es hat wenig Sinn die Generierung der Steuerbefehle schneller zu machen, als die Stellglieder folgen können. Die Signalverarbeitung erfolgt also in einem relativ engen Zeitbereich (= Bandpassfilter). Alle Ein- und Ausgangssignale des Sytems sind dementsprechend bandpassgefiltert. Das System selbst besteht aus einem (hochdimensionalen) closed-loop-Regler und einem Feedforward-Netzwerk, das die Korrekturbefehle aus dem Regler (Steuerbefehl aus dem strategiegenerierenden Netzwerk minus den tatsächlichen Positionen der Stellglieder (alle Größen bandpassgefiltert) mit den (unter Umständen zeitverzögerten) Steuerbefehlen aus dem strategiegenerierenden Netzwerk assoziiert, um in Zukunft diesen errechneten Korrekturbefehl bei Anliegen des Steuerbefehls am Feedforward-Netzwerk antezipierend direkt an die Stellglieder zu geben. Das Feedforward-Netzwerk ersetzt durch Lernen zunehmend den im nachhinein, wenn auch schnell operierenden Regler.

Es werden Trainings- und Arbeitsphase unterschieden. In der Trainingsphase werden die bandpaßgefilterten Steuerbefehl aus dem strategiegenerierenden Netzwerk etwas zeitverzögert angeboten, damit die gelernten Korrekturen an die Stellglieder gegeben werden, bevor der Fehler im Regler detektiert und von dort korrigiert wird. Das im Feedforward-Netzwerk gespeicherte Wertepaar besteht aus dem behandelten Steuerbefehl-Signal und der Korrektur aus dem Regler.

In der Arbeitsphase löst ein Steuerbefehl gemäß der beim Training benutzten Zeitverzögerung den Korrekturbefehl aus, bevor der Fehler manifest wird.

An der Peripherie werden die Steuerbefehle aus dem zusammengesetzten Netzwerk und bandpaßgefilterten Korrekturbefehle von Feedforward-Netzwerk und Regler entsprechend verrechnet, z.B. komponentengerecht, d.h. unter Berücksichtigung des topographischen Prinzips superponiert (addiert und ggf. renormiert). Die Korrekturberichte aus dem Regler können ggf. nach Integration und Verstärkung mit einer für das strategiegenerierende Netzwerk handhabbaren Zeitkonstante an das strategiegenerierende Netzwerk zurückgemeldet werden. Das strategiegenerierende Netzwerk würde so soviel wie möglich dieser Korrekturbefehle lernen und damit das Feedforward-Netzwerk entlasten. Eine Trainingsphase empfiehlt sich, wenn das strategiegenerierende Netzwerk selbst neue Steuerbefehle lernt. Allerdings geht dies off-line nur, wenn ein entsprechendes Kurzzeitgedächtnis für die notwendigen Korrekturen vorhanden ist. Ansonsten muß mehr oder weniger unter on-line Bedingungen trainiert werden (zusätzliches Bewegungstraining).

Ein Ausführungsbeispiel sowie weitere Vorteile werden nachstehend anhand der Zeichnungsfiguren 1 bis 4 erläutert. Es zeigt:

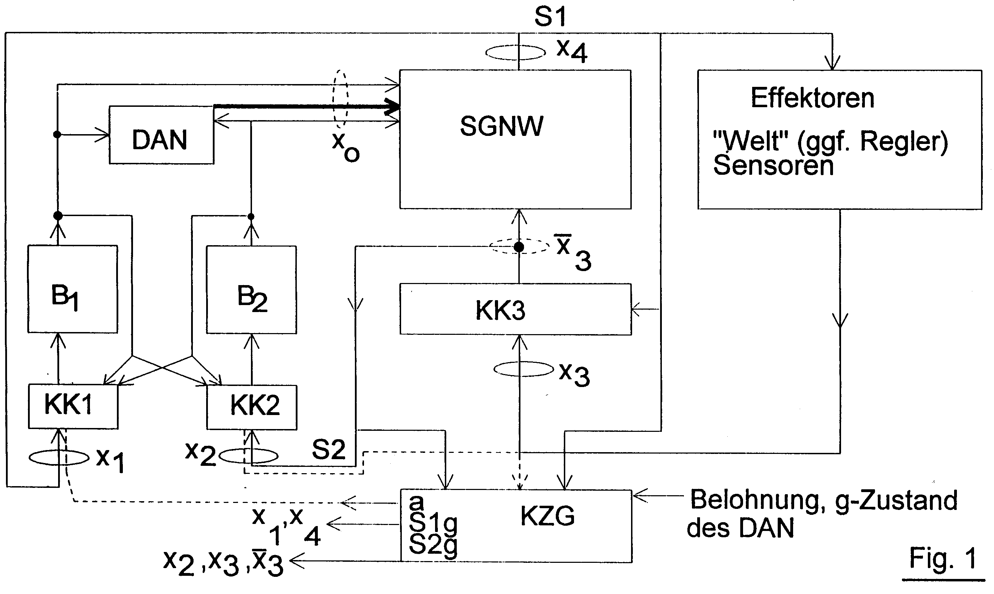

Fig. 1 - 4  jeweils ein 1. bis 4. Ausführungsbeispiel der Erfindung.

In den Zeichnungsfiguren kennzeichnen die punktiert dargestellten Linien optionale Verbindungen. Darüber hinaus kennzeichnet der Buchstabe "a" eine abgeleitete Größe oder einen zeitverzögerten Wert aus einem Kurzzeitgedächtnis. Die Buchstabenfolgen "S1g" und "S2g" kennzeichnen zwischengespeicherte Werte, die in einer Starttrainingsphase oder in einer während des Betriebes stattfindenden Trainingsphase die aus der Umwelt durch die sensorische Einrichtung aufgenommenen Werte und die dazugehörenden Steuerbefehle ersetzen. Dies wird auch durch die die Verbindungsleitung umschlingenden Kreise gekennzeichnet.

Von einer aus einem oder mehreren Sensoren bestehenden sensorischen Einrichtung SE werden die erfaßten Werte S2, die zu einem oder mehreren Vektoren mit mehreren Komponenten zusammengefaßt worden sind, einem strategiegenerierenden Netzwerk SGNW und einem Netzwerk B2 mit einer vorgeschalteten Kohonenkarte KK2 eines Netzwerksystems zugeführt. Ebenso werden die von dem strategiegenerierenden Netzwerk SGNW aufgrund der Vektoren S2 erzeugten Vektoren S1, die Steuerbefehle für Handlungseinheiten HE darstellen, neben ihrer Zuführung zu den Handlungseinheiten HE einem Netzwerk B1 mit einer vorgeschalteten Kohonenkarte KK1 des Netzwerksystems zugeführt. Sowohl die Steuerbefehle S1 als auch die sensorischen Werte S2 werden vor Zuführung zu den jeweiligen Netzwerken B1, B2 über die Kohonenkarten KK1, KK2 geführt. Die Netzwerke B1, B2 besitzen an ihren Ausgangsseiten jeweils Verbindungen zu ihren eigenen Kohonenkarten KK1 bzw. KK2, als auch eine Verbindung zu der Kohonenkarte KK1, KK2 des anderen Netzwerkes B1, B2. Die Ausgangswerte der Netzwerke B1, B2 werden ebenfalls einem Dynamikanalysator DAN zugeführt, der zwischen stabilen und unstabilen Ausgangswerten unterscheidet. Schließlich werden die Ausgangswerte der Netzwerke B1, B2 des Netzwerksystems dem strategiegenerierenden Netzwerk strategiegenerierende Netzwerk zugeführt. Als weitere Eingangsinformation erhält das strategiegenerierende Netzwerk SGNW das Ergebnis des Dynamikanalysators DAN, der zwischen go-Zuständen, no-go-Zuständen und chaos-Zuständen unterscheidet. In Abhängigkeit seiner Eingangswerte erzeugt das strategiegenerierende Netzwerk wiederum Steuerbefehle S1, die den Handlungseinheiten HE als auch dem zugehörigen Netzwerk B1 des Netzwerksystems zugeführt werden. Infolge der Steuerbefehle S1 werden von den sensorischen Einrichtungen SE Vektoren S2 erfaßt, die dem zugehörige Netzwerk B2 zugeführt werden. Gleichfalls werden die Steuerbefehle S1 als auch die sensorischen Werte S2 einer dem strategiegenerierenden Netzwerk SGNW vorgeschalteten Kohonenkarte KK3 zugeführt. Schließlich werden die von der sensorischen Einrichtung SE erfaßten Sensorwerte S2 als auch die Steuerbefehle S1 einem Kurzzeitgedächtnis KZG zugeführt, welches diese Wertepaare abspeichert.

Das erfindungsgemäße Verfahren zerfällt in zwei Handlungsbestandteile. In einer Trainingsphase werden ausgesuchte Wertepaare S1g/S2g als $x_n$-Werte (n = 1, ...,i) den Kohonenkarten KK1, KK2 der Netzwerke B1, B2 des Netzwerksystems zugeführt. Ebenso werden diese Werte dem strategiegenerierenden Netzwerk SGNW zugeführt. Im Laufe dieses Trainings bilden sich dann in den zugehörigen Netzwerken SGNW, B1, B2 bestehende Synapsenstärken aus. Hierbei können die dem strategiegenerierenden Netzwerk zugeführten Werte ($x_0$) die Ausgangswerte des Dynamikanalysators und der Netzwerke B1, B2 des Netzwerksystems ersetzen und deren Zuführung erst dann erfolgen, wenn der Dynamikanalysator DAN Stabilität im Training zeigt. Nach Abschluß der Trainingsphase wird der Roboter in Gang gesetzt mittels eines ersten Steuerbefehles S1. Infolge dieses Steuerbefehles S1 erzeugen die Handlungseinheiten HE eine Handlung, die zu einer Veränderung der sensorischen Werte S2 führen, die dem strategiegenerierenden Netzwerk SGNW über die Kohonenkarte KK3 als auch dem Netzwerk B2 über die Kohonenkarte KK2 des Netzwerksystems sowie dem Kurzzeitgedächtnis KZG zugeführt werden. Infolge der von der sensorischen Einrichtung SE erfaßten Werte S2 gibt das strategiegenerierende Netzwerk SGNW Steuerbefehle S1 aus, die sowohl den Handlungseinheiten HE, dem Netzwerk B1 des Netzwerksystems über die Kohonenkarte KK1 als auch dem Kurzzeitgedächtnis KZG und dem strategiegenerierenden Netzwerk SGNW selbst zugeführt werden. Die Ausgangswerte der Netzwerke B1, B2 werden sowohl ihren jeweiligen zugeordneten Kohonenkarten KK1, KK2 als auch der Kohonenkarte KK2, KK1 des benachbarten Netzwerkes B2, B1 zugeführt. Des weiteren werden die Ausgangswerte der Netzwerke B1, B2 dem Dynamikanalysator DAN und dem strategiegenerierenden Netzwerk SGNW zugeführt. Der Dynamikanalysator DAN unterscheidet aufgrund der Stabilität bzw. Unstabilität der Ausgangswerte der Netzwerke B1, B2 in go-, no-go- oder chaos-Zustände. Diese Zustände werden dem strategiegenerierenden Netzwerk SGNW wiederum mitgeteilt, das aufgrund seiner weiteren Eingangswerte neue Steuerbefehle S1 erzeugt, die wiederum zu veränderten Steuerbefehlen S2 der sensorischen Einrichtungen SE führen. Nach Erreichen eines stabilen Zustandes der Ausgangswerte der Netzwerke B1, B2 wird das zugehörige Wertepaar S1, S2 zusammen mit den zeitlich vor diesem Wertepaar S1/S2 erfaßten und im Kurzzeitgedächtnis abgespeicherten Wertepaare den Netzwerken SGNW, B1, B2 auftrainiert. Somit wird die "positive" Erfahrung des Roboters sofort umgesetzt, so daß bei Auftreten eines Wertepaares S1/S2, das zwar in der vorbeschriebenen Situation zu keinem stabilen Ausgangswert aus dem Netzwerksystem geführt hat, jedoch zeitlich vor und in Verbindung mit einem als bekannt eingestuften Wertepaar S1/S2 steht, die Situation als bekannt eingeschätzt wird.

In der Figur 2 wird ein Ausführungsbeispiel der Erfindung wiedergegeben, bei dem ein Netzwerksystem durch ein gemischt hierarchisches "Viererpack"-Netzwerksystem ersetzt ist. Das Netzwerk nw, welches ein strategiegenerierendes Netzwerk sowie ein Netzwerksystem umfaßt, wird durch ein Ensemble von vier gleichartig wie das Netzwerk nw aufgebauten Netzwerken a0, n1, n2, n3 ersetzt, wobei $a_0$ dem alten Netzwerk nw entspricht und n1, n2, n3 neue Netzwerke sind. n2 wird im nächsten Schritt durch den Viererpack der nächsten Generation ersetzt. Die neuen Netzwerke n1, n2, n3 liegen im Bypass zum alten Netzwerk a0 (nw) und können so sukzessive von a0 lernen, bis unter Kontrolle von a0 deren Ausgang zunehmend berücksichtigt wird.

Dies geht am besten parametergesteuert. Jede ungerade Inputkomponente zu a0 wird ersetzt durch $S2_k*(1-q) + q*S2_{k+1}$ ; jede gerade Inputkomponente wird ersetzt durch $S2_k*(1-q) + q*S1_{k/2n1-3}$ . $S2_k$ stellt die k-te Komponente des sensorischen Inputs dar, $S1_{k/2n1-3}$ die k/2(=m) te Komponente (k ist gerade) des vereinigten Vektors aller Ausgangswerte der Netzwerke n1 bis n3 dar. q bleibt so lange 0 bis die Ausgangswerte von n1 bis n3 im Feedbackformat diejenigen von a0 approximieren, was am einfachsten geht, wenn die Netzwerke n1,2,3 die Ausgangswerte (ggf. nach topografischem Prinzip aufgeteilt) von a0 lernen. Bis dieser Fall eingetreten ist ist der Superpositionsparameter für a0 gleich 1, für die übrigen Netzwerke des Viererpacks gleich 0. Anschließend sind sowohl q als auch die Parameter, die die Superposition der Ausgangswerte steuern zur Variation freigegeben.

Durch diesen Prozeß haben alle neuen Netzwerke des Viererpacks das alte Repertoire und damit H gelernt. Im Prinzip könnte nun jedes Netzwerk des Viererpacks autonom über seine Lernprozesse (Erreichen bzw Erweitern von H) anhand der Stabilität seines Netzwerksystems entscheiden. Es erscheint aber zumindest als Option für die Stabilität des Systems sinnvoll, diese Automomie einzuschränken dahingehend, daß das Lernsignal nur dann gegeben wird, wenn die Chaos /go-Zustand Transition in eine Phase der Stabilität der topologischen Nachbarn fällt. Oder diese Nachbarn eine synchrone Transition durchmachen.

Dabei übernimmt das alte Netzwerk a0 das Managament von Eingangs- und Ausgangswerten aller Netzwerke n1, n2, n3 (des Viererpacks) inklusive ihrer Gewichtungen. Diese Gewichtungen sind vor allen Dingen für den zurückgeführten Ausgang der vier Netzwerke von Bedeutung, die nun alle auf das normale Feedbackformat (identisch mit Format des ursprünglichen Steuerbefehls) reduziert werden.

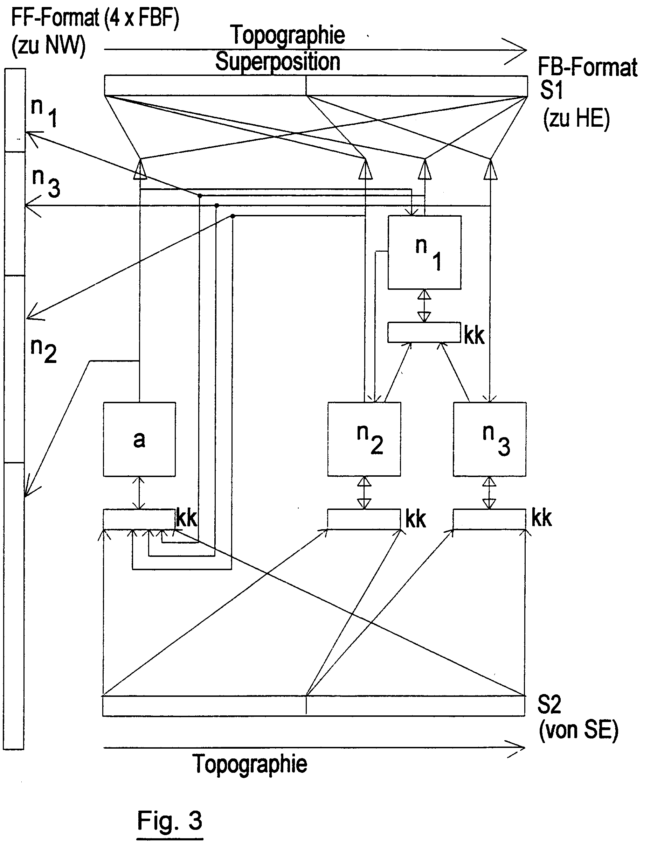

Dies kann beispielsweise durch gewichtete Superposition bei Erhaltung der Topographie erfolgen, wie dies nachstehend im Zusammenhang mit der Figur 3 erläutert wird. Als Resultat wird aber das Repertoire des Feedback-Outputs und damit der Steuersatz für untergeordnete Strukturen selbst ohne flexible Gewichtung mindestens verdreifacht. Für die Feedforward-Projektion FF zu einem übergeordneten, nicht dargestellten Netzwerk ist es nicht nötig, die Ausgänge der vier Netzwerke a, n1, n2, n3 auf Feedbackformat FB zu reduzieren, da auf der Kohonenkarte dieses übergeordneten Netzwerkes genügend Platz ist, um den aus den Ausgängen a, n1, n2, n3 bestehenden zusammengesetzten Feedforward Vektor aufzunehmen.

Weiterhin können in diesem Zusammenhang Karten als Sonderfall einer parallelen Erweiterung angesehen werden, vor allem für topographisch analog angeordnete Ensembles gleichartiger Subsysteme.

Bei der in Figur 3 dargestellten Ausführungsform handelt es sich um eine Vertiefung der in Figur 2 beschriebenen Ausführung, wobei insbesondere die innere Kommunikation der Netzwerke und die Organisation der Ein- und Ausgänge eines Viererpacks beschrieben werden. S2 ist die topographisch geordnete Information von der sensorischen Einrichtung SE. Der Output der Netzwerke a und n1 weist schon die richtige Topographie auf und kann direkt superponiert werden, um den Steuerbefehl S1 zu den Handlungseinheiten HE und untergeordneten Netzwerken zu bilden. Die jeweils benachbarten Ausgangskomponenten der Netzwerke n2 und n3 werden zu einem Wert zusammengefaßt, um das topographisch richtige Format zu bilden, das mit den Ausgängen der Netzwerke a und n1 zum Steuerbefehl S1 (= FB) superponiert werden kann. Die Erhaltung der Topographie ist durch die Symmetrie der Zuordnung der Netzwerke zu S2 und S1 angedeutet. Für die Feedforward Projektion FF zu einem übergeordneten Netzwerk ist es nicht nötig, die Ausgänge der 4 Netzwerke a, n1, n2, n3 auf Feedbackformat FB zu reduzieren, da auf der Kohonenkarte dieses Netzwerkes genügend Platz ist um den aus den Ausgängen der Netzwerke a, n1, n2, n3 bestehenden zusammengesetzten Feedforward Vektor aufzunehmen.

Als Zwischenformat ist das doppelte Feedbackformat (doppelte Anzahl der Komponenten) möglich. Die Vereinigung der Ausgangswerte von n1 uns n2 bilden das Rückgrat dieses Formats, die Ausgangswerte von a0 und n3 werden auf die doppelte Komponentenzahl gebracht, sei es durch schlichte Verdoppelung oder Interpolation und anschließend unter Wahrung des topografischen Prinzips superponiert.

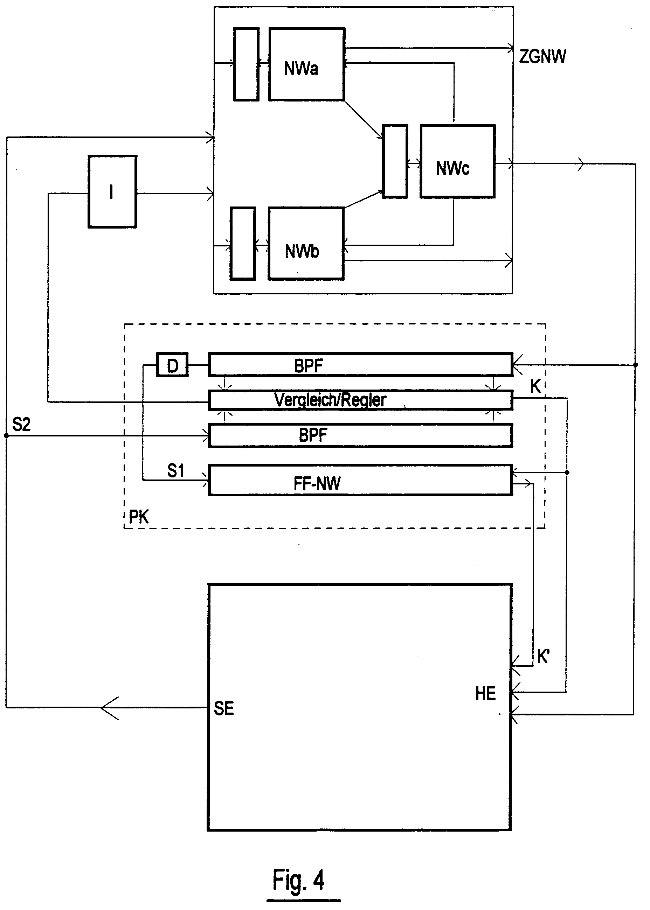

Figur 4 beschreibt folgende Ausführungsform: Das zusammengesetzte Netzwerk besteht aus den Modulen, die aus strategiegenerierenden Netzwerken SGNW und Netzwerksystemen bestehen. Deren Ausgänge S1 gehen an die Handlungseinheiten HE und an PK. PK besteht aus Bandpassfiltern BPF, einem Regler (zwischen den BPF) und einem Feedforward Netzwerk. Im Signalweg liegen noch ein Integrator I mit der Zeitkonstanten des zusammengesetzten Netzwerks und ein Delay D, das während des

Trainingsprozesses aktiv, ansonsten überbrückt ist. Die Folgen der Steuersätze S1 und deren Korrekturen K und K' aus PK, die gemeinsam die Handlungseinheiten HE steuern, werden von der sensorischen Einrichtung SE erfaßt und an das zusammengesetzte Netzwerk und PK (BPF) weitergegeben.

**Patentansprüche**

1. Verfahren zum Steuern eines autonom explorierenden Roboters, wobei von einer sensorischen Einrichtung (SE) erfaßte Werte (S2) einem strategiegenerierenden Netzwerk (SGWN) zugeführt werden, welches aufgrund seiner während einer Trainingsphase auftrainierten Synapsenstärken Steuerbefehle (S1) an Handlungseinheiten (HE) abgibt,
**dadurch gekennzeichnet,**
daß die von der sensorischen Einrichtung (SE) erfaßten Werte (S2) und die vom strategiegenerierenden Netzwerk (SGNW) ausgegebenen Steuerbefehle (S1) einem Netzwerksystem mit mehreren Netzwerken (B1, B2) zugeführt werden, welches zwischen während einer Trainingsphase auftrainierten Wertepaaren (S1/S2) und unbekannten Wertepaaren (S1/S2) unterscheidet.

2. Verfahren nach Anspruch 1,
**dadurch gekennzeichnet,**
daß die Ausgangswerte der Netzwerke des (B1, B2) des Netzwerksystems dem strategiegenerierenden Netzwerk (SGNW) zugeführt werden.

3. Verfahren nach Anspruch 1 oder 2,
**dadurch gekennzeichnet,**
daß die Ausgangswerte der Netzwerke (B1, B2) des Netzwerksystems einem Dynamikanalysator (DAN) zugeführt werden, der die auftrainierten Wertepaare (S1/S2) von den unbekannten Wertepaaren (S1/S2) anhand der Stabilität dieser Ausgangswerte bestimmt.

4. Verfahren nach Anspruch 3,
**dadurch gekennzeichnet,**
daß das Ergebnis des Dynamikanalysators (DAN) dem strategiegenerierenden Netzwerk (SGNW) als zusätzlicher Eingangswert zugeführt wird.

5. Verfahren nach einem der Ansprüche 2 bis 4,
**dadurch gekennzeichnet,**
daß die Ausgangswerte der Netzwerke (B1, B2) des Netzwerksystems sowohl dem strategiegenerierenden Netzwerk (SGNW) wie auch dem Dynamikanalysator (DAN) zugeführt werden.

6. Verfahren nach einem der Ansprüche 1 bis 5,
**dadurch gekennzeichnet,**
daß die den Netzwerken (B1, B2) des Netzwerksystems zugeführten Werte (S1/S2) über Kohonenkarten (KK1/KK2) den Netzwerken (B1, B2) zugeführt werden.

7. Verfahren nach einem der Ansprüche 1 bis 6,
**dadurch gekennzeichnet,**
daß die dem strategiegenerierenden Netzwerk (SGNW) zugeführten Werte (S1/S2) über wenigstens eine Kohonenkarte (KK3) dem strategiegenerierenden Netzwerk (SGNW) zugeführt werden.

8. Verfahren nach einem der Ansprüche 1 bis 7,
**dadurch gekennzeichnet,**
daß die von den sensorischen Einrichtung erfaßten Werte (S2) und die von dem strategiegenerierenden Netzwerk (SGNW) ausgegebenen Steuerbefehle (S1) in einem Kurzzeitgedächnis (KZG) abgelegt werden.

9. Verfahren nach einem der Ansprüche 1 bis 8,
**dadurch gekennzeichnet,**
daß in der Trainingsphase dem strategiegenerierenden Netzwerk (SGNW) und den Netzwerken (B1, B2) des Netzwerksystems ausgewählte Wertepaare (S1/S2) zugeführt werden.

10. Verfahren nach Anspruch 9,
**dadurch gekennzeichnet,**
daß dem strategiegenerierenden Netzwerk (SGNW) und den Netzwerken (B1, B2) des Netzwerksystems während der Trainingsphase anstelle der von der sensorischen Einrichtung (SE) erfaßten Werte (S2) und den Steuerbefehlen (S1) des strategiegenerierenden Netzwerkes (SGNW) die ausgewählten Wertepaare (S1/S2) zugeführt werden.

11. Vorrichtung zum Steuern eines autonom explorierenden Robotors, umfassend ein strategiegenerierendes Netzwerk (SGNW), eine sensorische Einrichtung (SE) zum Erfassen von Werten der Umwelt (S2), wobei die von der sensorischen Einrichtung (SE) erfaßten Werte (S2) dem strategiegenerierenden Netzwerk (SGNW) zugeführt werden, und Handlungseinheiten (HE), die von dem strategiegenerierenden Netzwerk (SGNW) erzeugte Steuerbefehle (S1) empfangen,
**dadurch gekennzeichnet,**
daß ein Netzwerksystem mit mehreren Netzwerken (B1, B2) vorgesehen ist, welches die von den sensorischen Einrichtung (SE) erfaßten Werte (S2) und die von dem strategiegenerierenden Netzwerk (SGNW) erzeugten Steuerbefehle (S1) empfängt.

12. Vorrichtung nach Anspruch 11,
**dadurch gekennzeichnet,**
daß das Netzwerksystem wenigstens zwei Netzwerke (B1, B2) umfaßt.

13. Vorrichtung nach Anspruch 12,
**dadurch gekennzeichnet,**
daß jedem Netzwerk (B1, B2) eine Kohonenkarte (KK1, KK2) vorgeschaltet ist, wobei die Ausgangswerte jedes Netzwerkes (B1, B2) sowohl seiner jeweiligen Kohonenkarte (KK1, KK2) als auch der Kohonenkarte (KK1, KK2) des anderen Netzwerkes (B1, B2) als Eingangswert zugeführt wird.

14. Vorrichtung nach einem der Ansprüche 11 bis 13, **dadurch gekennzeichnet,** daß die Ausgangswerte der beiden Netzwerke (B1, B2) einem ihnen nachgeschalteten Dynamikanalysator (DAN) zugeführt werden, der anhand der Stabilität der Ausgangswerte der beiden Netzwerke (B1, B2) ein diesen Netzwerken (B1, B2) zugeführtes Wertepaar (S1/S2) als bekannt bzw. unbekannt unterscheidet, globale oder lokale go-, no-go- oder Chaos-Zustände anzeigt und diese zusammen mit den Ausgangwerten der Netzwerke (B1, B2) an das strategiegenerierende Netzwerk (SGNW) weitergibt.

15. Vorrichtung nach Anspruch 14, **dadurch gekennzeichnet,** daß der Dynamikanalysator (DAN) als Schieberegister ausgebildet ist.

16. Vorrichtung nach Anspruch 14, **dadurch gekennzeichnet,** daß der Dynamikanalysator (DAN) als Fourieranalysator mit Spektral ausgebildet ist.

17. Vorrichtung nach einem der Ansprüche 11 bis 16, **dadurch gekennzeichnet,** daß die von der sensorischen Einrichtung (SE) erfaßten Werte (S2) und die von dem strategiegenerierenden Netzwerk (SGNW) ausgegebene steuerbefehle (S1) einem Kurzzeitgedächtnis (KZG) zugeführt werden.

18. Vorrichtung nach Anspruch 17, **dadurch gekennzeichnet,** daß das Kurzzeitgedächtnis (KZG) als Schieberegister ausgebildet ist.

19. Vorrichtung nach einem der Ansprüche 11 bis 18, **dadurch gekennzeichnet,** daß die von den sensorischen Einrichtung (SE) erfaßten Werte (S2) und die von dem strategiegenerierenden Netzwerk (SGNW) erzeugten Steuerbefehle (S1) vor Zuführung zu dem strategiegenerierenden Netzwerk (SGNW) über eine weitere Kohonenkarte (KK3) geführt werden.

20. Verfahren nach Anspruch 1, **dadurch gekennzeichnet, daß** die Steuerung des Roboters durch Variation bereits gespeicherter Wertepaare erweitert wird.

21. Verfahren nach einem der Ansprüche 1 bis 10, **dadurch gekennzeichnet, daß** die Verfahren als Modul in einem größerem Netzwerk solcher Module eingesetzt werden.

22. Verfahren nach einem der Ansprüche 1 bis 10, **dadurch gekennzeichnet, daß** eine fraktale Netzwerkarchitektur durch rekursives Ersetzen nach beliebigen Erfolgskriterien einzelner Module (nw) durch einen Vierer-Pack vierer verschalteter Module (a0, n1, n2, n3) generiert wird, wobei die grundlegende Struktur des Vierer-Packs die ist, daß die Verschaltungen innerhalb des Packs zwischen den Modulen hierarchisch, die Verbindungen zu Strukturen außerhalb des Vierer-Packs parallel organisiert sind.

23. Vorrichtung nach einem der Ansprüche 11 bis 19, **dadurch gekennzeichnet, daß** die beschriebene Vorrichtung ein Modul in einem größerem Netzwerk gleichartiger Module ist, wobei die Anordnung und die Verbindungen der Module in einem solchen Netzwerk gemäß des Verfahrens nach Anspruch 10 organisiert sind.

Fig. 1

nw $\longrightarrow$ "Viererpack"

$n_w$ $\longrightarrow$

$a_0$

$n_1$

$n_2$ $n_3$

$a_0$

$n_1^o$

$a^1$ $n_1^1$

$n_2^1$ $n_3^1$

$n_3$

usw.

Fig. 2

FF-Format (4 x FBF)
(zu NW)

Topographie
Superposition

FB-Format
S1
(zu HE)

$n_1$

$n_3$

$n_2$

$n_1$

kk

a

$n_2$

$n_3$

kk

kk

kk

kk

S2
(von SE)

Topographie

Fig. 3

Fig. 4